# EUROPEAN PATENT SPECIFICATION

(11) **EP 1 147 004 B1**
(45) Date of publication and mention of the grant of the patent: **26.02.2003**
(21) Application number: 99960073.7
(22) Date of filing: 29.11.1999
(51) Int. Cl.: B29C 53/78

(54) **SPIRAL WOUND PIPE AND A METHOD FOR MANUFACTURING THE SAME**
SPIRALFÖRMIG GEWICKELTES ROHR UND VERFAHREN ZU DESSEN HERSTELLUNG
TUBE ENROULE EN SPIRALE ET SON PROCEDE DE FABRICATION

(30) Priority: 01.12.1998 SE 9804151
(43) Date of publication of application: 24.10.2001
(73) Proprietor: Uponor Innovation AB, 513 81 Fristad (SE)
(72) Inventor: FORSELL, Fredrik, S-513 96 Fristad (SE); HÖLSÖ, Eino, 515 61 Viskafors (SE); JÄRVENKYLÄ, Jyri, FIN-15870 Holloa (FI)
(74) Representative: Skeppstedt, Anita
(86) International application number: SE9902213
(87) International publication number: WO00035660

(56) References cited:
- EP-A1- 0 333 061
- DE-C1- 19 652 054
- DK-B- 119 961
- US-A- 4 824 502

## Description

### TECHNICAL FIELD

The present invention relates to a spirally wound thermoplastic pipe and to a method for producing it

### PRIOR ART

It is already known to produce spirally wound pipes of thermoplastic with sections running in a helical line and overlapping each other. It is also known to manufacture spirally wound thermoplastic pipes from helical hollow profiles.

Spirally wound pipes for water drainage or thermoplastic pipes of the type described here can advantageously be used, for example, as manholes for large pipe systems or as ventilation pipes, for example for parking decks and airports.

One advantage of spirally wound thermoplastic pipes is that their manufacture entails low investment costs compared to other production methods, as a result of which the pipes can also be manufactured in small series while maintaining profitability.

European Patent Specification EP-0 429 506 B1 describes a spirally wound pipe manufactured from thermoplastic hollow profiles which, by means of a material added between the profiles, are welded together to form a pipe. A problem with the spirally wound pipe in EP-0 429 506 B1 is that, from the point of view of leakage, it is very sensitive to inaccuracies in the weld seams. The weld seam only needs to have pores or other inaccuracies at a single location for leakage to occur. Such inaccuracies in the weld seams can also be difficult to detect in sealing tests carried out before delivery, since the weld seams may burst under the stresses which arise only when the pipe is in use.

A known method for solving the above sealing problem arising in pipes of the type described in EP-0 429 506 B1 is described in European Patent Specification EP-0 333 061 B1. According to this patent specification, the hollow profiles are wound spirally around a conventional, non-spirally-wound thermoplastic pipe. Since the inner thermoplastic pipe does not have any weld seams, a sealed pipe Is obtained which retains its seal irrespective of any slight inaccuracies In the weld seams between the spirally wound hollow profiles. However, a disadvantage of the pipe according to EP-0 333 061 B1 is that the benefit of lower investment costs which is achieved in spirally wound thermoplastic pipes is partially lost through the addition of the conventional inner pipe which itself requires to be made in larger series to give good profitability.

A method for manufacturing spirally wound thermoplastic pipes of the type in question here is described in Finnish Patent Application No. 921967. The latter describes a welding method in which a thermoplastic hollow profile of rectangular cross section is wound helically on a weld drum at the same time as the profile surfaces which are to be welded together are heated to the desired temperature with hot air, after which welding material is extruded via an extruder nozzle situated in immediate proximity to the weld point onto the heated profile surfaces in two beads along each edge of the profile surface. The hollow profile sections coated with welding material are then pressed together with the aid of a press roller situated adjacent to the welding drum, so that a double seam is formed between adjoining hollow profile turns. A disadvantage of the method according to Finnish Patent Application No. 921967 is that it requires an Intricate and therefore expensive extruder nozzle in order to be able to discharge the necessary weld material at the right place in the narrow space situated immediately before the point where the profiles are welded together. A further disadvantage of the method is that the double seam which is formed between adjoining hollow profile turns entails increased risk of leakage in the pipe since the profile surfaces lying against each other are not welded to each other in their entirety.

The Danish patent DK-A-119961 describes a solution to some of the above problems. It discloses a flexible, elongate profile section which is fed through an extrusion die, coated with a resin and spirally wound on a rotating drum. The profile of the last-wound spiral turn is welded to the next one in such a way that a weld seam is formed along the whole of adjoining edge surfaces of the profiles. However, with this solution, there is still a risk that an incomplete weld seam between adjoining hollow profile turns, may cause water leakage through the pipe wall.

### DESCRIPTION OF THE INVENTION

The invention solves the above problems by providing a spirally wound thermoplastic pipe and a method for producing the same, according to the accompanying claims 1 and 12 respectively.

Thus a spirally wound thermoplastic pipe comprising a spirally wound profile (preferably an extruded hollow profile of rectangular or rhomboid cross section), in which the spiral turns of profiles of the pipe are joined together by a weld seam, said weld seam covering the whole of the adjoining edge surfaces of the profiles. The invention is particularly characterized in that a spirally wound, band-shaped sealing film bears against those surfaces of the profiles facing towards the centre of the pipe, in such a way that the sealing film overlaps the weld seam between the profiles.

The sealing film is preferably welded to those surfaces of the profiles facing towards the centre of the pipe. The width of the sealing film is preferably greater than or equal to the width of the profiles in the longitudinal direction of the spirally wound pipe.

Furthermore, a method is made available for producing the spirally wound thermoplastic pipe, wherein
- a flexible, elongate profile section is fed through an extrusion station in which the profile, while being heated, is coated with an outer layer of a weldable thermoplastic material along its entire periphery; after which
- the profile Is wound in spiral turns to form a pipe about a rotating drum while the said outer layer from the extrusion station maintains such a temperature that the thermoplastic material is weldable, with the profile in the last-wound spiral turn being welded to the profile in the next spiral turn in such a way that a weld seam is formed along the whole of the adjoining edge surfaces of the profiles.
   The method is particularly characterized in that a spirally wound, band-shaped sealing film bears on those surfaces of the profiles facing towards the centre of the pipe in such a way that the sealing film overlaps the weld seam between the profiles.

A number of layers of the said sealing film are preferably wound spirally between the drum and the spirally wound profiles. The number of layers can be between two and six, preferably four.

During the spiral winding, the sealing film is advantageously welded to those surfaces of the profile sections facing towards the centre of the pipe, by means of the sealing film being heated to a weld temperature by a heating arrangement situated in dose proximity to the said drum.

Other embodiments and features of the invention are described in the following description of preferred embodiments and in the attached patent claims.

In summary, the invention makes it possible to produce spirally wound thermoplastic pipes more cost-effectively than in known techniques.

### BRIEF DESCRIPTION OF THE DRAWINGS

The invention will be described below on the basis of illustrative embodiments and with reference to the attached drawings, in which:
Fig. 1 shows a diagrammatic side view of an arrangement for producing spirally wound thermoplastic pipes according to the invention;
Fig. 2 shows a diagrammatic plan view of the arrangement in Fig. 1;
Fig. 3 shows a diagrammatic section through the crosshead of the extrusion station;
Fig. 4 shows a section of a cut-open spirally wound thermoplastic pipe according to one embodiment of the invention;
Fig. 5 shows an broken sectional view of a wall portion of the spirally wound thermoplastic pipe according to the invention, the band-shaped sealing film being wound in such a way that it overlaps itself;
Fig. 6 shows, in a sectional view similar to Fig. 5, an embodiment in which the sealing film is wound spirally such that the edges of the film bear against each other without overlapping;
Fig. 7 is a sectional view of a wall portion of the spirally wound thermoplastic pipe according to the invention, in which the width of the sealing film is four times the width of the profiles in the longitudinal direction of the spirally wound pipe; and
Fig. 8 is a sectional view similar to that shown in Fig. 7, but in which four layers of sealing film are applied on the profiles.

### DESCRIPTION OF PREFERRED EMBODIMENTS

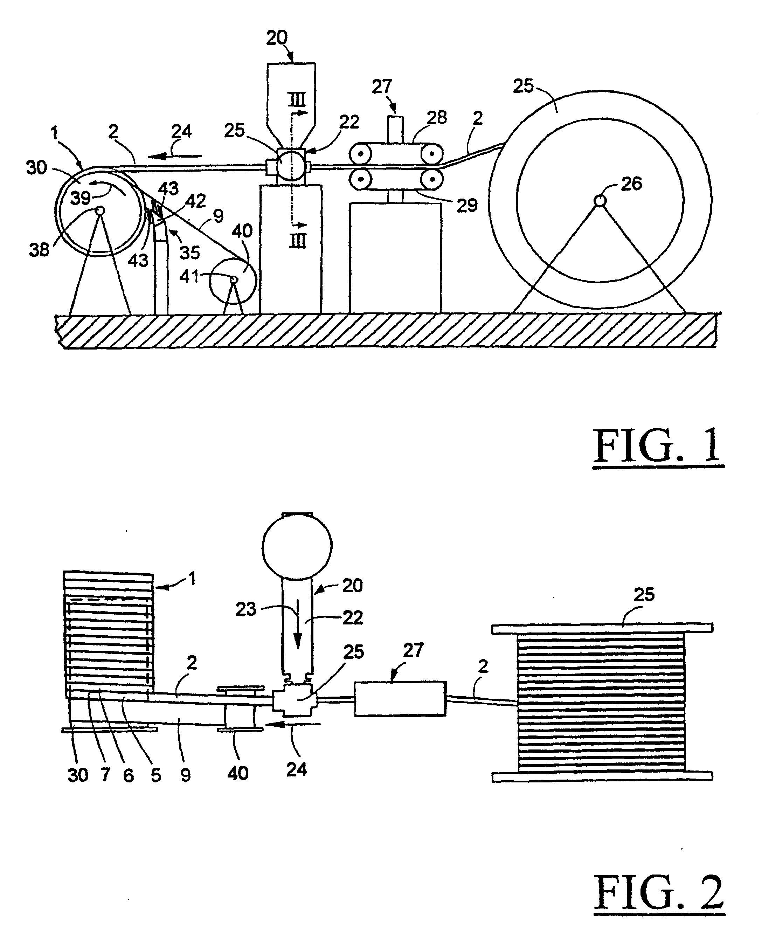

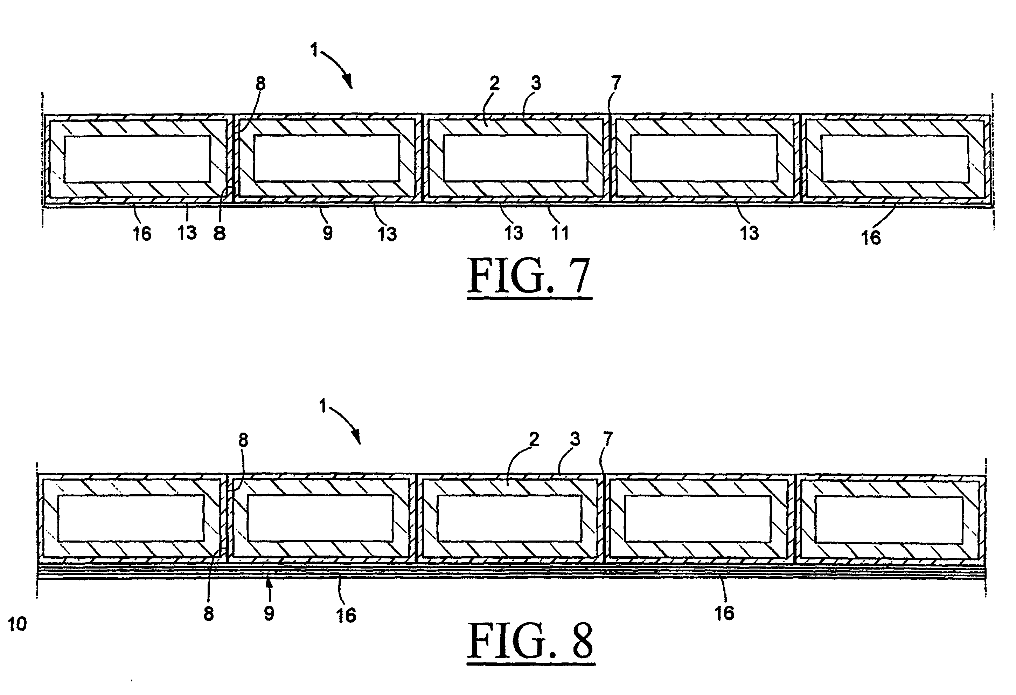

An arrangement for producing a spirally wound thermoplastic pipe according to the invention is shown diagrammatically in Fig. 1. The pipe is generally designated by reference number 1. The arrangement according to Fig. 1 is shown from above in Fig. 2. In the preferred embodiment of the arrangement according to the invention shown here, an extruded hollow profile 2 of rectangular or rhomboid cross section is fed from a storage reel 25 mounted about a shaft 26. As previously stated, the profile 2 is made from a thermoplastic material suitable for the purpose, for example polyvinyl chloride (PVC), polypropylene or polyethylene. The said thermoplastics can be used with or without admixture of fibres or other additives. The polymer chains in the plastic can be oriented in a specific direction or cross-linked, as is the case with cross-linked polyethylene (PEX). The profile is flexible enough to allow it to be wound about a drum.

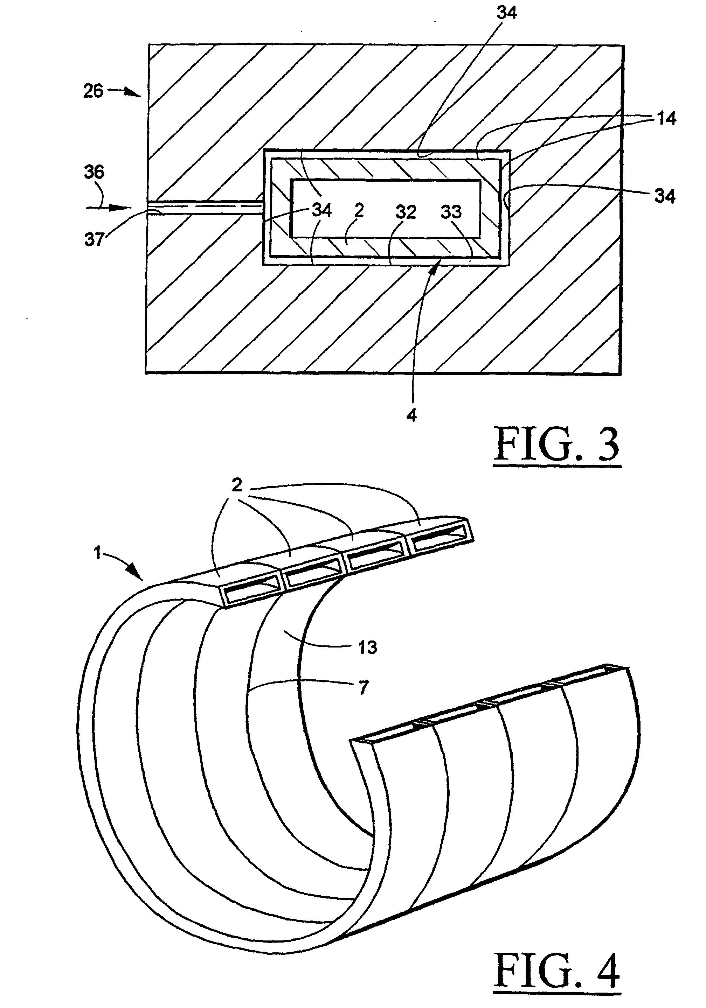

The profile 2 is drawn from the storage reel 25 by means of a removal device 27 which, in the example shown, comprises two belt conveyors 28, 29 between which the profile 2 is fed In the feed direction 24 to an extrusion station 20. The extrusion station 20 consists of a conventional extrusion machine 22 whose feed direction 23 according to the invention is oriented essentially at right angles to the feed direction 24 of the profile 2. The extrusion machine 22 is provided with a crosshead 25. Fig. 3 shows an extrusion tool 26 included in the said crosshead 25. The view shown in Fig. 3 is a diagrammatic sectional view of the extrusion tool 26, taken along the line III-III in Fig. 1. The extrusion tool 26 has a passage 32 through which the profile 2 passes in the feed direction 24. The passage 32 is so dimensioned that a channel 33 is formed around the profile 2 as the latter passes through the tool 26.

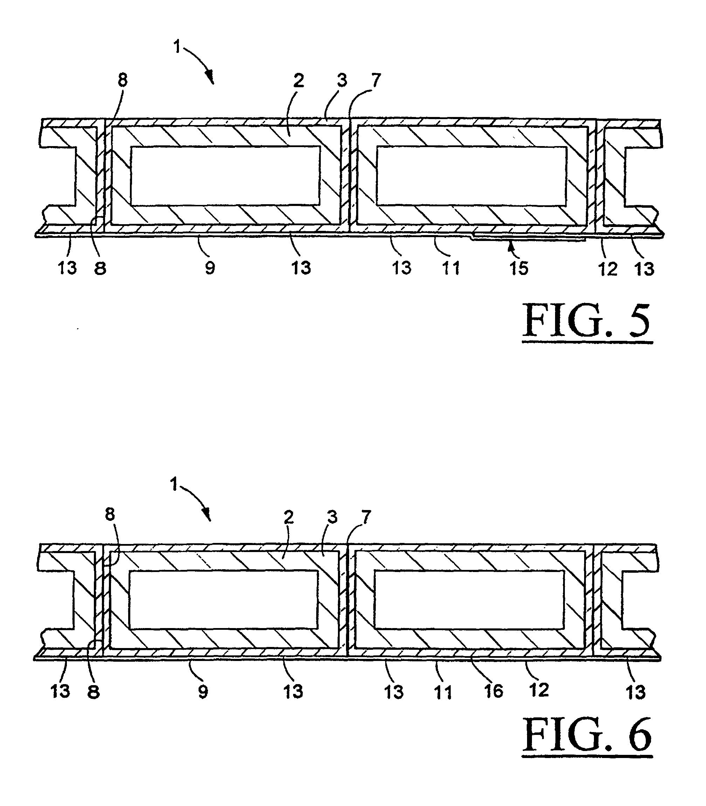

The position of the profile 2 within the passage 32 of the tool is adjusted in a known manner and with great accuracy by means of positioning devices (not shown) so that the width of the channel 33, i.e. the distance between the outer surfaces 14 of the profile 2 and the walls 34 of the passage 32, remains the same around the profile 2. While the profile 2 is being fed through the tool 26, a thermoplastic is extruded from the extrusion machine 22 in the direction of arrow 36 through a delivery channel 37 and into the channel 33 formed around the profile 2, all the outer surfaces 14 of the profile 2, i.e. its entire periphery 4, being coated with an outer layer of weldable thermoplastic material. The extent of this layer thus corresponds in Fig. 3 to the channel 33, and it can be seen clearly in Figures 5 to 8 under reference number 3. The outer layer 3 can comprise the same type of thermoplastic as the profile 2, or it can comprise another thermoplastic with suitable properties. For example, the material of the outer layer 3 can be chosen with a view to optimum weldability and resistance to wear, while the material of the profile 2 can be chosen such that the pipe 1 has optimum annular stiffness. As can be seen from Fig. 2, the feed direction 23 of the extrusion machine 22 is angled in relation to the feed direction 24 of the profile 2. In the preferred embodiment shown in the figure, the feed direction 23 of the extrusion machine 22 is also essentially at right angles to the feed direction 24 of the profile 2.

After the profile 2 in the extrusion station 20 has been coated with the outer layer 3 of weldable thermoplastic material, it is wound in spiral turns 5, 6 about a rotating drum 30 to form a pipe 1. When the profile 2 reaches the drum 30, it is still at such a temperature - from the extrusion station 20 - that the thermoplastic is weldable. That part of the profile 2 which has just been wound on the drum 30, i.e. the most recently wound spiral turn 5, Is welded to that part of the profile 2 which is situated in the spiral tum 6 situated closest to the said most recently wound spiral turn 5, in such a way that a weld seam 7 is formed along the whole of the adjoining edge surfaces 8 of the profile 2. It should be noted that the weld seam 7 between the spiral turns 5, 6 arises directly upon contact between the edge surfaces 8 by means of the fact that, as has already been mentioned, the outer layer 3 of the profiles 2 retains its welding temperature from the extrusion station 20. There is therefore no addition of welding material to the weld seam 7.

Fig. 4 shows a spirally wound thermoplastic pipe according to the invention. The pipe has been cut open to reveal the cross section of the profiles 2.

As can be seen from Figures 1 and 2, the extrusion station 20 is situated at a distance from the said drum 30. As can be seen from Fig. 1, the drum 30 rotates about a shaft 38 in the direction of the arrow 39.

In a preferred embodiment of the invention, a band-shaped sealing film 9 of thermoplastic material is wound spirally between the drum 30 and the spirally wound profiles 2, in such a way that the sealing film 9 overlaps the weld seams 7 which are formed between the profiles 2 during the spiral winding. The sealing film is fed to the drum 30 from a storage reel 40, which rotates about a shaft 41. However, in an alternative embodiment (not shown), the sealing film 9 can be fed directly from the station where it is produced. The material of the sealing film 9 is preferably one of the thermoplastics mentioned in connection with the profile 2.

In the preferred embodiment, the sealing film 9 is welded, during the spiral winding, to those surfaces 13 of the profiles 2 facing towards the centre of the pipe 1, by means of the sealing film 9 being heated to welding temperature by a heating device 35 situated in dose proximity to the said drum 30. The heating device 35 is shown in Fig. 1, in which example it comprises a nozzle 42 for blowing warm air out to the sealing film 9. The warm air is Indicated diagrammatically in the figure by the wavy lines 43. In the example shown, the nozzle 42 also blows warm air onto the drum 30 in order to pre-heat the latter. In alternative embodiments (not shown), the heating device 35 can heat the sealing film 9 not with warm air, but by means of microwaves, infrared heat or conventional heating elements.

Fig. 5 shows a sectional view of part of the wall of the pipe 1. A sealing film 9 is arranged, in accordance with the above, on those surfaces 13 of the profiles 2 facing towards the centre of the pipe 1. The centre of the pipe 1 is not shown in the figure, but is taken to be situated below the lower edge of the figure. As will also be seen from the figure, the sealing film 9 in a preferred embodiment is wound spirally against those surfaces 13 of the profiles 2 facing towards the centre of the pipe 1 in such a way that adjoining spiral turns 11, 12 are made to partially overlap each other in an overlap portion 15. The overlap portion affords double security against leakage since, as has already been stated, the sealing film 9 also overlaps the weld seams 7 between the profiles 2.

However, Fig. 6 shows an alternative embodiment where the adjoining spiral turns 11, 12 of the sealing film 9 are made to bear against each other without overlapping, along a boundary line 16.

The thickness of the band-shaped sealing film 9 Is between 0.1 and 0.5 mm, preferably 0.2 mm. As the sealing film 9 is therefore thin in relation to the height of the profile 2 in the radial direction of the pipe 1 , a number of layers 10 of the said sealing film 9 are preferably wound between the drum 30 and the spirally wound profiles 2. The layers 10 are preferably between two and six in number, and in a preferred embodiment there are four layers 10 of sealing film 9 wound spirally between the drum 30 and the profiles 2. Fig. 8 shows such a pipe 1 with four layers 10 of sealing film 9. The figure shows how the boundary lines 16 between different spiral turns of the sealing film 9 are placed such that the various layers 10 overlap each other.

The width of the sealing film 9 is greater than or equal to the width of the profiles 2 in the longitudinal direction of the spirally wound pipe 1. This ratio can be seen from Figures 5, 6, 7 and 8. Fig. 7 shows a sectional view of a pipe wall in which, in a preferred embodiment, the width of the sealing film 9 is four times the width of the profiles in the longitudinal direction of the spirally wound pipe 1.

The invention is not limited to the embodiments described above and shown in the attached figures, but can be freely varied within the scope of the attached patent claims. For example, the profile 2 can be fed directly from an extrusion station in which it is manufactured, instead of being fed from a storage reel 25 as shown in Fig. 1. Thermoplastic materials other than those mentioned can of course also be chosen.

## Claims

1. Spirally wound thermoplastic pipe (2) comprising a spirally wound profile in which the spiral turns (5, B) of profiles (2) of the pipe are joined together by a weld seam (7), said weld seam (7) covering the whole of the adjoining edge surfaces (15) of the profiles (2), **characterized in that** a spirally wound, band-shaped sealing film (9) bears on those surfaces (13) of the profiles (2) facing towards the centre of the pipe (1), in such a way that the seating film (9) overlaps the weld seam (7) between the profiles (2).

2. Spirally wound thermoplastic pipe (1) according to claim 1, **characterized in that** the sealing film (9) is welded to those surfaces (13) of the profiles (2) facing towards the centre of the pipe (1).

3. Spirally wound thermoplastic pipe (1) according to claim 1, **characterized in that** the width of the band-shaped sealing film (9) is greater than or equal to the width of the profiles (2) in the longitudinal direction of the spirally wound pipe (1).

4. Spirally wound thermoplastic pipe (1) according to claim 1, **characterized in that** the width of the band-shaped sealing film (9) is four times the width of the profiles (2) in the longitudinal direction of the spirally wound pipe (1).

5. Spirally wound thermoplastic pipe (1) according to one or more of claims 1 to 4, **characterized in that** a number of layers (10) of the said sealing film (9) are wound spirally between the drum (30) and the spirally wound profiles (2).

6. Spirally wound thermoplastic pipe (1) according to claim 5, **characterized in that** between two and six layers (10) of sealing film (9) are wound spirally between the drum (30) and the spirally wound profiles (2).

7. Spirally wound thermoplastic pipe (1) according to claim 5 to 6, **characterized in that** four layers (10) of sealing film (9) are wound spirally between the drum (30) and the spirally wound profiles (2).

8. Spirally wound thermoplastic pipe (1) according to one or more of claims 1 to 7, **characterized in that** the band-shaped sealing film (9) Is wound spirally in such a way that adjoining spiral turns (11, 12) are made to partially overlap each other.

9. Spirally wound thermoplastic pipe (1) according to one or more of claims 1 to 8, **characterized in that** the thickness of the band-shaped sealing film (9) is between 0.1 and 0.5 mm.

10. Spirally wound thermoplastic pipe (1) according to claim 9, **characterized in that** the thickness of the band-shaped sealing film (9) is 0.2 mm.

11. Spirally wound thermoplastic pipe (1) according to one or more of claims 1 to 10, **characterized in that** the profile (2) comprises an extruded hollow profile with rectangular or rhomboid cross section.

12. Method for producing a spirally wound thermoplastic pipe (1), including the steps:
- a flexible, elongate profile (2) is fed through an extrusion station (20) in which the profile, while being heated, is coated with an outer layer (3) of a weldable thermoplastic material along Its entire periphery (4); after which
- the profile (2) is wound in spiral tums (5, 6) to form a pipe (1) about a rotating drum (30) while the said outer layer (3) from the extrusion station (20) maintains such a temperature that the thermoplastic material is weldable, with the profile (2) in the last-wound spiral turn (5) being welded to the profile (2) in the next spiral turn (6) in such a way that a weld seam (7) is formed along the whole of the adjoining edge surfaces (8) of the profiles (2). **characterized in that** a band-shaped sealing film (9) of thermoplastic material is wound spirally between the drum (30) and the spirally wound profiles (2) In such a way that the sealing film (9) overlaps the weld seams (7) which are formed between the profiles (2) during the spiral winding.

13. Method according to claim 12, **characterized in that** a number of layers (10) of the said sealing film (9) are wound spirally between the drum (30) and the spirally wound profiles (2).

14. Method according to claim 13, **characterized in that** between two and six layers (10) of sealing film (9) are wound spirally between the drum (30) and the spirally wound profiles (2).

15. Method according to claim 13 or 14, **characterized in that** four layers (10) of sealing film (9) are wound spirally between the drum (30) and the spirally wound profiles (2).

16. Method according to claim 13, 14 or 15, **characterized in that** the sealing film (9) is wound spirally in such a way that adjoining spiral turns (11, 12) are made to partially overlap each other.

17. Method according to claim 12, **characterized in that** the said sealing film (9) is welded to those surfaces of the profiles (2) facing towards the centre of the pipe (1), by means of the sealing film (9) being heated to a weld temperature by a heating arrangement (35) situated In dose proximity to the said drum (30).

## Patentansprüche

1. Spiralförmig gewickeltes thermoplastisches Rohr (1) mit einem spiralförmig gewickelten Profil, in dem die Spiralwindungen (5, 6) der Profile (2) des Rohres durch eine Schweißnaht (7) zusammengefügt sind, wobei die Schweißnaht (7) die angrenzenden Kantenflächen (15) der Profile (2) gänzlich bedeckt, **dadurch gekennzeichnet, daß** ein spiralförmig gewickelter, bandförmiger Dichtfilm (9) auf den der Mitte des Rohres (1) zugewandten Flächen (13) der Profile (2) derart aufliegt, daß der Dichtfilm (9) die Schweißnaht (7) zwischen den Profilen (2) überlappt.

2. Spiralförmig gewickeltes thermoplastisches Rohr (1) nach Anspruch 1,
**dadurch gekennzeichnet, daß** der Dichtfilm (9) auf die der Mitte des Rohres (1) zugewandten Flächen (13) der Profile (2) geschweißt ist.

3. Spiralförmig gewickeltes thermoplastisches Rohr (1) nach Anspruch 1,
**dadurch gekennzeichnet, daß** die Breite des bandförmigen Dichtfilms (9) größer als die oder gleich der Breite der Profile (2) in Längsrichtung des spiralförmig gewickelten Rohres (1) ist.

4. Spiralförmig gewickeltes thermoplastisches Rohr (1) nach Anspruch 1,
**dadurch gekennzeichnet, daß** die Breite des bandförmigen Dichtfilms (9) vier Mal der Breite der Profile (2) in Längsrichtung des spiralförmig gewickelten Rohres (1) entspricht.

5. Spiralförmig gewickeltes thermoplastisches Rohr (1) nach einem oder mehreren der Ansprüche 1 bis 4, **dadurch gekennzeichnet, daß** eine Anzahl von Schichten (10) des Dichtfilms (9) spiralförmig zwischen der Trommel (30) und den spiralförmig gewickelten Profilen (2) gewickelt sind.

6. Spiralförmig gewickeltes thermoplastisches Rohr (1) nach Anspruch 5,
**dadurch gekennzeichnet, daß** zwischen zwei und sechs Schichten (10) des Dichtfilms (9) spiralförmig zwischen der Trommel (30) und den spiralförmig gewickelten Profilen (2) gewickelt sind.

7. Spiralförmig gewickeltes thermoplastisches Rohr (1) nach Anspruch 5 bis 6,
**dadurch gekennzeichnet, daß** vier Schichten (10) des Dichtfilms (9) spiralförmig zwischen der Trommel (30) und den spiralförmig gewickelten Profilen (2) gewickelt sind.

8. Spiralförmig gewickeltes thermoplastisches Rohr (1) nach einem oder mehreren der Ansprüche 1 bis 7, **dadurch gekennzeichnet, daß** der bandförmige Dichtfilm (9) derart spiralförmig gewickelt ist, daß sich die angrenzenden Spiralwindungen (11, 12) teilweise überlappen.

9. Spiralförmig gewickeltes thermoplastisches Rohr (1) nach einem oder mehreren der Ansprüche 1 bis 8, **dadurch gekennzeichnet, daß** die Dicke des bandförmigen Dichtfilms (9) zwischen 0,1 und 0,5 mm beträgt.

10. Spiralförmig gewickeltes thermoplastisches Rohr (1) nach Anspruch 9,
**dadurch gekennzeichnet, daß** die Dicke des bandförmigen Dichtfilms (9) 0,2 mm beträgt.

11. Spiralförmig gewickeltes thermoplastisches Rohr (1) nach einem oder mehreren der Ansprüche 1 bis 10, **dadurch gekennzeichnet, daß** das Profil (2) ein extrudiertes Hohlprofil mit rechteckigem oder rautenförmigem Querschnitt aufweist.

12. Verfahren zur Herstellung eines spiralförmig gewickelten thermoplastischen Rohres (1), mit den folgenden Schritten:
- Durchführen eines flexiblen, verlängerten Profils (2) durch eine Extrusionsstation (20), in der das Profil während des Erwärmens mit einer äußeren Schicht (3) eines schweißfähigen thermoplastischen Materials entlang seines Gesamtumfangs (4) beschichtet wird; wonach
- das Profil (2) in Spiralwindungen (5, 6) zu einem Rohr (1) um eine Drehtrommel (30) gewickelt wird,während die äußere Schicht (3) aus der Extrusionsstation (20) eine Temperatur aufrechterhält, bei der das thermoplastische Material schweißfähig ist, wobei das Profil (2) in der zuletzt gewickelten Spiralwindung (5) derart mit dem Profil (2) in der darauffolgenden Spiralwindung (6) verschweißt wird, daß eine Schweißnaht (7) gänzlich entlang der angrenzenden Kantenflächen (8) der Profile (2) gebildet wird,
**dadurch gekennzeichnet, daß**
ein bandförmiger Dichtfilm (9) aus thermoplastischem Material spiralförmig zwischen der Trommel (30) und den spiralförmig gewickelten Profilen (2) derart gewickelt wird, daß der Dichtfilm (9) die zwischen den Profilen (2) während des Wickelns der Spirale gebildeten Schweißnähte (7) überlappt.

13. Verfahren nach Anspruch 12, **dadurch gekennzeichnet, daß** eine Anzahl von Schichten (10) des Dichtfilms (9) spiralförmig zwischen der Trommel (30) und den spiralförmig gewickelten Profilen (2) gewickelt ist.

14. Verfahren nach Anspruch 13, **dadurch gekennzeichnet, daß** zwischen zwei und sechs Schichten (10) des Dichtfilms (9) spiralförmig zwischen der Trommel (30) und den spiralförmig gewickelten Profilen (2) gewickelt sind.

15. Verfahren nach Anspruch 13 oder 14, **dadurch gekennzeichnet, daß** vier Schichten (10) des Dichtfilms (9) spiralförmig zwischen der Trommel (30) und den spiralförmig gewickelten Profilen (2) gewickelt sind.

16. Verfahren nach Anspruch 13, 14 oder 15, **dadurch gekennzeichnet, daß** der Dichtfilm (9) derart spiralförmig gewickelt wird, daß sich angrenzende Spiralwindungen (11, 12) teilweise überlappen.

17. Verfahren nach Anspruch 12, **dadurch gekennzeichnet, daß** der Dichtfilm (9) auf die der Mitte des Rohres (1) zugewandten Flächen der Profile (2) geschweißt wird, indem der Dichtfilm (9) mittels einer Heizvorrichtung (35), die sich in unmittelbarer Nähe der Trommel (30) befindet, bis auf eine Schweißtemperatur erwärmt wird.

## Revendications

1. Tube thermoplastique (1) enroulé en spirale, comprenant un profilé enroulé en spirale dans lequel les spires (5, 6) de spirale des profilés (2) du tube sont raccordées mutuellement par un joint soudé (7), le joint soudé (7) recouvrant la totalité des surfaces (15) des bords adjacents des profilés (2), **caractérisé en ce qu'**un film d'étanchéité (9) en forme de bande enroulée en spirale est en appui sur les surfaces (13) des profilés (2) qui sont fournées vers le centre du tube (1) d'une manière telle que le film d'étanchéité (9) recouvre le joint soudé (7) entre les profilés (2).

2. Tube thermoplastique (1) enroulé en spirale selon la revendication 1, **caractérisé en ce que** le film d'étanchéité (9) est soudé aux surfaces (13) des profilés (2) qui sont tournées vers le centre du tube (1).

3. Tube thermoplastique (1) enroulé en spirale selon la revendication 1, **caractérisé en ce que** la largeur du film d'étanchéité (9) en forme de bande est supérieurs ou égale à la largeur des profilés (2) dans la direction longitudinale du tube enroulé en spirale (1).

4. Tube thermoplastique (1) enroulé en spirale selon la revendication 1, **caractérisé en ce que** la largeur du film d'étanchéité (9) en forme de bande est égale à quatre fois la largeur des profilés (2) dans la direction longitudinale du tube enroulé en spirale (1).

5. Tube thermoplastique (1) enroulé en spirale selon une ou plusieurs des revendications 1 à 4, **caractérisé en ce que** plusieurs couches (10) du film d'étanchéité (9) sont enroulées en spirale entre le tambour (30) et les profilés enroulés en spirale (2).

6. Tube thermoplastique (1) enroulé en spirale selon la revendication 5, **caractérisé en ce que** deux à six couches (10) du film d'étanchéité (9) sont enroulées en spirale entre le tambour (30) et les profilés enroulés en spirale (2).

7. Tube thermoplastique (1) enroulé en spirale selon les revendications 5 à 6, **caractérisé en ce que** quatre couches (10) du film d'étanchéité (9) sont enroulées en spirale entre le tambour (30) et les profilés enroulés en spirale (2).

8. Tube thermoplastique (1) enroulé en spirale selon l'une ou plusieurs des revendications 1 à 7, **caractérisé en ce que** le film d'étanchéité (9) en forme de bande est enroulé en spirale afin que les spires adjacentes (11, 12) se recouvrent partiellement.

9. Tube thermoplastique (1) enroulé en spirale selon l'une ou plusieurs des revendications 1 à 8, **caractérisé en ce que** l'épaisseur du film d'étanchéité en forme de bande (9) est comprise entre 0,1 et 0,5 mm.

10. Tube thermoplastique (1) enroulé en spirale selon la revendication 9, **caractérisé en ce que** l'épaisseur du film d'étanchéité (9) en forme de bande est de 0,2 mm.

11. Tube thermoplastique (1) enroulé en spirale selon l'une ou plusieurs des revendications 1 à 10, **caractérisé en ce que** le profilé (2) est un profilé creux extrudé de section rectangulaire ou en losange.

12. Procédé de fabrication d'un tube thermoplastique (1) enroulé en spirale, comprenant les étapes suivantes :
l'avance d'un profilé souple allongé (2) à un poste d'extrusion (20) dans lequel le profilé, tout en étant chauffé, est revêtu d'une couche externe (3) d'une matière thermoplastique soudable à toute sa périphérie (4), puis
l'enroulement du profilé (2) en spires (5, 6) pour la formation d'un tube (1) autour d'un tambour rotatif (30) alors que la couche externe (3) provenant du poste d'extrusion (20) garde une température telle que la matière thermoplastique est soudable, le profilé (2) de la dernière spire enroulée (5) étant soudé au profilé (2) de la spire suivante (6) d'une manière telle qu'un joint soudé (7) est formé sur toutes les surfaces adjacentes de bord (8) des profilés (2), **caractérisé en ce qu'**un film d'étanchéité (9) en forme de bande d'une matière thermoplastique est enroulé en spirale entre le tambour (30) et les profilés enroulés en spirale (2) de manière que le film d'étanchéité (9) recouvre les joints soudés (7) qui sont formés entre les profilés (2) pendant l'enroulement en spirale.

13. Procédé selon la revendication 12, **caractérisé en ce que** plusieurs couches (10) du film d'étanchéité (9) sont enroulées en spirale entre le tambour (30) et les profilés enroulés en spirale (2).

14. Procédé selon la revendication 13, **caractérisé en ce que** deux à six couches (10) du film d'étanchéité (9) sont enroulées en spirale entre le tambour (30) et les profilés enroulés en spirale (2).

15. Procédé selon la revendication 13 ou 14, **caractérisé en ce que** quatre couches (10) du film d'étanchéité (9) sont enroulées en spirale entre le tambour (30) et les profilés enroulés en spirale (2).

16. Procédé selon la revendication 13, 14 ou 15, **caractérisé en ce que** le film d'étanchéité (9) est enroulé en spirale afin que des spires adjacentes (11, 12) soient formées d'une manière telle qu'elles se recouvrent partiellement.

17. Procédé selon la revendication 12, **caractérisé en ce que** le film d'étanchéité (9) est soudé aux surfaces des profilés (2) qui sont tournées vers le centre du tube (1), par chauffage du film d'étanchéité (9) à une température de soudage à l'aide d'un arrangement de chauffage (35) placé très près du tambour (30).
